# EUROPEAN PATENT SPECIFICATION

(11) **EP 1 899 265 B1**
(45) Date of publication and mention of the grant of the patent: **22.05.2013**
(21) Application number: 06777545.2
(22) Date of filing: 03.07.2006
(51) Int. Cl.: C01B 3/36

(54) **METHOD FOR PRODUCING SYNTHESIS GAS**
VERFAHREN ZUR HERSTELLUNG VON SYTHESEGAS
PROCÉDÉ DE PRODUCTION D'UN GAZ DE SYNTHÈSE

(30) Priority: 05.07.2005 EP 05106072
(43) Date of publication of application: 19.03.2008
(73) Proprietor: Shell Internationale Research Maatschappij B.V., 2596 HR Den Haag (NL)
(72) Inventor: ZUIDEVELD, Pieter Lammert, NL-1031 CM Amsterdam (NL); GROOTVELD, Gerard, NL-1031 CM Amsterdam (NL)
(74) Representative: Matthezing, Robert Maarten
(86) International application number: PCT/EP2006/063789
(87) International publication number: WO 2007/003620

(56) References cited:
- WO-A-99/55618
- WO-A-02/090250
- GB-A- 944 059
- US-A1- 2004 118 047

## Description

The present invention relates to a method for producing synthesis gas comprising CO and H₂ from a carbonaceous stream using an oxygen containing stream.

Systems for producing synthesis gas are well known from practice.

Generally, a carbonaceous stream such as coal, brown coal, peat, wood, coke, soot, or other gaseous, liquid or solid fuel or mixture thereof, is partially combusted in a gasification reactor using an oxygen containing gas such as substantially pure oxygen or (optionally oxygen enriched) air or the like, thereby obtaining a.o. synthesis gas (CO and H₂), CO₂ and optionally a slag. In case a slag is formed during the partial combustion, it drops down and is drained through an outlet located at or near the reactor bottom.

The hot product gas, i.e. raw synthesis gas, is usually quenched in a quench section which is located downstream of the gasification reactor. In the quench section a suitable quench medium such as water, cold gas, recycled synthesis gas or the like is introduced into the raw synthesis gas in order to cool it.

After the quenching the raw synthesis gas is further processed, e.g. to remove undesired components from it or to convert the CO into methanol and various other hydrocarbons. The H₂ may be used as such as a product gas or used for e.g. hydrocracking purposes.

WO-A-99/55618 describes a process to prepare a synthesis gas by means of two parallel-operated processes. One process is the partial oxidation, also referred to as gasification, of a biomass feed. In the parallel process a natural gas is used as feed for a steam reforming process. Synthesis gas mixtures from both processes are combined.

WO-A-02/090250 describes a process to prepare a synthesis gas by means of two parallel-operated partial oxidation processes. In one process a solid or liquid feed is used as feed and in the parallel process a natural gas is used as feed. Synthesis gas mixtures from both processes are combined.

A problem of known gasification reactors which operate on a liquid and especially on a solid feed, such as coal such as in WO-A-02/090250, is that they usually have a relative low availability, i.e. after a certain operating period, the reactor has to be shut down for a while to check and repair the internals, if necessary. As a result no synthesis gas is produced for a while or the syngas production is substantially halved as would be in the case of the process of WO-A-02/09025C. Gasification of coal is known from Sulpher, 247 (1996), pages 49-54. The above problem is even more pertinent in case the gasification reactor uses a particulate carbonaceous feed stream, such as coal and especially petroleum coke, that is intended to produce H₂ as the main product. Especially if the gasification process is applied in a refinery environment, using petroleum coke as the feed to the gasification process, a high H₂ availability, usually > 98% of the year, and/or a high synthesis gas availability for generating poweris desired. Hydrogen is used for the various refinery processes such as hydrotreating, hydrofinishing, hydrocracking and catalytic dewaxing. Disruptions in either the hydrogen or the power supply in a refinery is not desired.

It is an object of the present invention to at least minimize the above problem.

It is a further object to provide a system ensuring a high availability of synthesis gas, while using as few components as possible.
It is an even further object to provide an alternative system for producing synthesis gas.

One or more of the above or other objects can be achieved according the present invention by a method of producing synthesis gas comprising CO and H₂ from a carbonaceous stream using an oxygen containing stream, the method comprising at least the steps of:
(a) injecting a first, particulate carbonaceous stream and a first oxygen containing stream into a first gasification reactor, the first oxygen containing stream originating from a source of oxygen;
(b) at least partially oxidising the first carbonaceous stream in the first gasification reactor, thereby obtaining a first raw synthesis gas;
(c) removing the first raw synthesis gas obtained in step (b) from the first gasification reactor;
(d) injecting a second carbonaceous stream and a second oxygen containing stream into a second gasification reactor, wherein the second carbonaceous stream is a gaseous stream, and wherein the second oxygen containing stream originates from the source of oxygen used in step (a);
(e) at least partially oxidising the second carbonaceous stream in the second gasification reactor, thereby obtaining a second raw synthesis gas;
(f) removing the second raw synthesis gas obtained in step (e) from the second gasification reactor and wherein the first and second gasification reactors are used alternately.

It has surprisingly been found according to the present invention that synthesis gas can be produced while ensuring a very high availability of the synthesis gas, even if the gasification reactor intended for the particulate carbonaceous stream is out of order.

Further it has been found that the above may be achieved using a very simple system.

An important advantage of the present invention is that the combination of a gasification reactor intended for a particulate carbonaceous stream and a different type gasification reactor is more economic than if two gasification reactors intended for a particulate carbonaceous stream would be used.

The first and second gasification reactors may be any suitable reactor for partially oxidizing the respective carbonaceous stream. If desired more than one first and second gasification reactors may be used thereby obtaining a system comprising more than two gasification reactors being connected to the distributor.

The first, particulate carbonaceous stream usually is a high carbon containing feedstock such as naturally occurring coal, biomass or synthetic cokes. Synthetic cokes is also referred to as petroleum coke. Petroleum coke is a by-product of a widely applied crude oil refining process. Petroleum coke may also be obtained as the by-product of a tar sands upgrading process as for example described in US-A-2002/0170846. In this publication a process is described wherein the heavy oil fraction of a bitumen or tar sands feed is converted into a gas oil product by means of a fluid coking process. Petroleum coke may for example be prepared by delayed coking, which is probably the most widely used coking process. Delayed coking uses a heavy residual oil as a feedstock. During delayed coking, heavy residual oil is introduced into a furnace, heated to about 480 °C, and pumped into coking drums. The coking process initiates the formation of coke and causes it to solidify on the drum wall. Thermal decomposition drives off lower boiling products, which are removed continuously. When this reaction is complete, the drum is opened, and coke is removed. The first, particulate carbonaceous stream may be dry or wet. In the latter case the first stream is in the form of a slurry.

The second carbonaceous stream is a substantially gaseous stream suitable to be partially oxidized in the second gasification reactor. The second carbonaceous stream is a gaseous stream, most preferably natural gas or mixtures of natural gas and refinery gasses, suitably refinery gasses comprising methane and ethane. A gaseous feed is preferred because the gasification reactor and the downstream gas processing steps may be of a more simple design. Furthermore the hydrogen to carbon monoxide molar ratio will be higher, therefore resulting in less carbon dioxide by-product make in the water shift reaction.

The source of an oxygen containing stream may be any suitable source. Preferably substantially pure oxygen or (optionally oxygen enriched) air or the like is used. Further, preferably a single source is used to be connected to both the first and the second gasification reactor(s). Preferably, the oxygen containing stream comprises > 50 vol.% 02, preferably > 90 vol.% 02, more preferably > 95 vol.% 02, even more preferably > 99 vol.% 02. A preferred source of oxygen is prepared in a so-called air separation unit. Such air separation processes are well known and are also referred to as a cryogenic air separation process. In such a process compressed air is cooled and cleaned prior to cryogenic heat exchange and distillation into oxygen, nitrogen, and optionally, argon rich streams. Pressurizing these streams for delivery is accomplished by gas compression, liquid pumping or combinations of pumping followed by compression.

The capital investment for an air separation unit is very high. Thus processes, which require a lower oxygen capacity for the same synthesis gas production, are desired. In a preferred embodiment of the present invention the maximum capacity of the air separation unit is less than 80% of the sum of the oxygen requirements for the first and the second gasification reactor(s), especially if two first gasification reactors and one second gasification reactor is used. More preferably this percentage is less than 65%, especially when one first gasification reactors and one second gasification reactor is used. By definition the lower boundary for this percentage is 50%.

The person skilled in the art will readily understand that the distributor may have different embodiments as long as it is arranged to selectively connect the source of oxygen to the first or second gasification reactor.

With the term 'raw synthesis gas' is meant that this product stream may - and usually will - be further processed, e.g. in a dry solid remover, wet gas scrubber, a shift converter or the like.

The first and second gasification reactors are used alternately. More preferably the second gasification reactor is used as a spare reactor, which is only used if the first gasification does not operate, for example due to a failure to operate. In such an embodiment it is possible to limit the capacity of the air separation unit to a capacity, which is required to perform the gasification in the first gasification only. In case the first gasification fails, the second gasification can advantageously take over the preparation of synthesis gas, thereby making use of the oxygen manufacturing capacity, which is at that time not used by said first gasification reactor. As a result, the availability of synthesis gas is ensured, even if the first gasification reactor or one of the first gasification reactors is out of order or on hot standby, while minimizing the required capacity of the oxygen manufacturing unit, suitably the air separation unit.

According to a preferred embodiment the method further comprises the step of:
(g) transporting the first synthesis gas removed in step
(c) or the second synthesis gas removed in step (f) to a shift converter; and
(h) reacting at least a part of the CO in the first or second synthesis gas transported in step (g) in the shift converter to produce CO₂ and H2.

More preferably the maximum capacity of the air separation unit is less than the sum of the oxygen requirements for gasification of the petroleum coke feed and the oxygen requirement for gasification of the natural gas feed as described above.

Power generation based on petroleum coke is obtained by
(aa) partial oxidation of the petroleum coke and a certain second volume of oxygen per hour as obtained from the air separation unit to yield a synthesis gas mixture, (bb) using the synthesis gas as obtained from step (aa) and/or the optional spare synthesis to generate power wherein the maximum capacity of the air separation unit is less than the sum of the first and second oxygen volumes per hour..

The above embodiment is advantageous in case when one wants to isolate carbon dioxide prior to the power generation in, for example, a gas turbine. Carbon dioxide may be subjected to sequestration or suitably used for agricultural uses or enhanced oil recovery.

Hydrogen is prepared in said preferred embodiment from the petroleum coke by
(aa1) partial oxidation of the petroleum coke and a certain second volume of oxygen per hour as obtained from the air separation unit to yield a synthesis gas mixture, (bb1) subjecting the synthesis gas as obtained from step (aa1) and/or the optional spare synthesis gas as described above to a water gas shift step, (cc1) subjecting the shifted gas to a gas separation step to obtain a hydrogen rich mixture, wherein the maximum capacity of the air separation unit is less than the sum of the first and second oxygen volumes per hour. Gas separation may be performed by any means for purifying hydrogen, for example by membrane separation or more preferably by means of a pressure swing absorbing (PSA) process.

The invention will now be described by way of example in more detail with reference to the accompanying nonlimiting drawings, wherein:

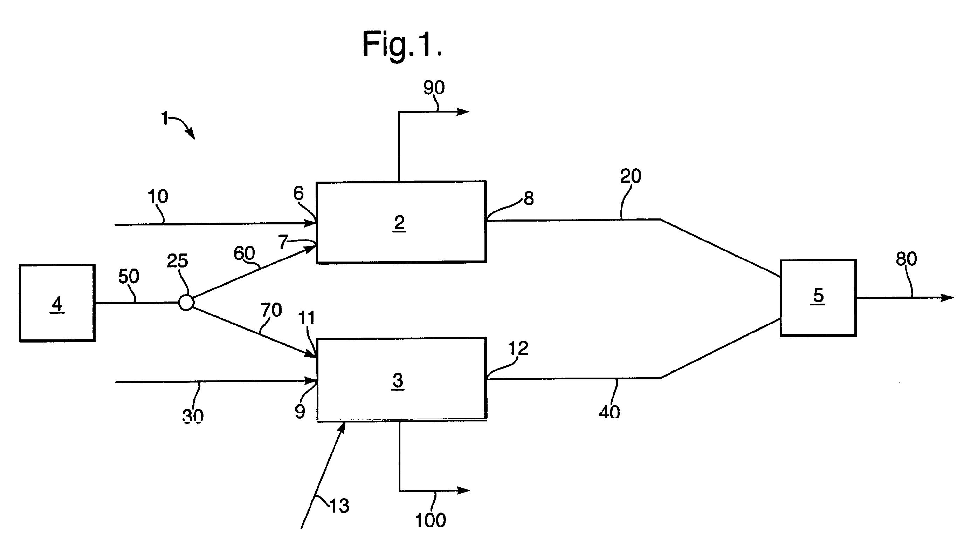

Figure 1 schematically shows a process scheme for performing a method according the present invention.

For the purpose of this description, a single reference number will be assigned to a line as well as a stream carried in that line. Same reference numbers refer to similar components.

Reference is made to Figure 1. Figure 1 schematically shows a system 1 for producing synthesis gas.

The system 1 comprises a first gasification reactor 2, a second gasification reactor 3, an oxygen source 4 and a shift converter 5. In the embodiment shown in Fig. 1, the first gasification reactor 2 is a coal gasification reactor and the second gasification reactor 3 is a gas gasification reactor.

In the system 1 according to Fig. 1 a particulate coal containing stream 10 and an oxygen containing stream 60 are fed at inlets 6 and 7, respectively, into the coal gasification reactor 2.

Similarly, a gas containing stream 30 and an oxygen containing stream are 70 are fed into the gas gasification reactor 3 at inlets 9 and 11.

During normal use of the embodiment cf Fig. 1 only the coal gasification reactor 2 is in function; the gas gasification reactor 3 functions as a spare unit for producing synthesis gas in case the coal gasification reactor 2 is out of order or on hot standby.

If the coal gasification reactor 2 is in function, the oxygen source 4 feeds an oxygen containing stream 50 to the distributor 25 which selectively connects the source 4 to the coal gasification reactor 2 via lines 50 and 60. At this point no oxygen is fed to the gas gasification reactor 3.

The carbonaceous streams 10 is partially oxidised in the gasification reactor 2 thereby obtaining raw synthesis gas 20 (removed via outlet 8) and a slag (removed via stream 90). Outlet 8 is located downstream of the first gasification reactor 2. To this one or more burners (not shown) are present in the gasification reactor 2.

The synthesis gas 20 produced in the coal gasification reactor 2 is usually fed to a quenching section (not shown); herein the raw synthesis gas is usually cooled.

As shown in the embodiment of Figure 1, the synthesis gas 20 leaving the reactor 2 at outlet 8 is further processed in a shift converter 5, to react at least a part of the CO to produce CO₂ and H₂, thereby obtaining a shift converted gas stream 80 which may be further processed or sold as such.

If desired, the synthesis gas stream 20 may be previously processed before entering the shift converter 5, e.g. in a dry solids removal unit (not shown) to at least partially remove dry ash in the raw synthesis gas 20. Also, the synthesis gas 20 may be fed to a wet gas scrubber (not shown).

If the coal gasification reactor 2 needs to be periodically checked, the gas gasification reactor 3 is started up (or is already on hot standby). The coal gasification reactor 2 is then shut down and the distributor 25 no longer feeds oxygen (via stream 60) to the coal gasification reactor 2, but connects the oxygen source 4 to the gas gasification reactor 3 via streams 50 and 70. The synthesis gas 40 removed from the gas gasification reactor 3 at outlet 12, may be processed similarly as the stream 20 and is also fed to the shift converter 5. Outlet 12 is located downstream of the second gasification reactor 3.In case a slag would be formed in the gasification reactor 3, a slag stream is removed via line 100.

According to an advantageous embodiment of the invention, the synthesis gas 40 is fed to the same shift converter 5 as stream 20 originating from the coal gasification reactor 2. Before stream 40 is fed to the same shift converter it is preferred to remove any solids from synthesis gas 20 in for example a separate dry solids removal step. Before stream 40 is fed to the same shift converter it is preferred to subject the synthesis gas to a separate wet gas scrubber. With separate is here meant that when the spare second gasification reactor 3 is used the synthesis gas 40 does not pass the dry solids removal step and/or the wet gas scrubber. As soon as the coal gasification reactor 2 is ready for use again, the coal gasification reactor 2 is restarted. Then the distributor 25 switches off the oxygen stream 70 to the gas gasification reactor 3, and oxygen is fed again through line 60 to coal gasification reactor 2. The gas gasification reactor 3 is then shut down or put on hot standby until later use. Thus, in the embodiment of Figure 1 the reactors 2 and 3 are used alternately.

The person skilled in the art will readily understand that, if desired, the switching between the reactors 2 and 3 may proceed gradually. Thus, if the reactor 2 is to be shut down, the distributor 25 gradually decreases the oxygen stream 60 to reactor 2, at the same time increasing the oxygen stream 70 to reactor 3. As a result, the distributor 25 feeds oxygen to both reactors 2,3 at the same time for a certain period.

In the embodiment of Figure 1 the system 1 may comprise an inlet for sulphur addition to sulfidise the catalyst being present in the shift converter 5. Hereby one and the same shift converter 5 can be used for the two different carbonaceous streams 10,30 (in this case, a "sour shift conversion" takes place in shift converter 5). Alternatively, a desulfurisation unit (not shown) may be present (thereby resulting in a "sweet shift conversion" in shift converter 5).

As the shift converter 5 is already known per se, it is not further discussed here in detail.

The person skilled in the art will readily understand that the present invention may be modified in various ways without departing from the scope as defined in the claims.

## Claims

1. Method of producing synthesis gas comprising CO and H₂ from a carbonaceous stream using an oxygen containing stream, the method comprising at least the steps of:
(a) injecting a first, particulate carbonaceous stream and a first oxygen containing stream into a first gasification reactor, the first oxygen containing stream originating from a source of oxygen;
(b) at least partially oxidising the first carbonaceous stream in the first gasification reactor, thereby obtaining a first raw synthesis gas;
(c) removing the first raw synthesis gas obtained in step (b) from the first gasification reactor;
(d) injecting a second carbonaceous stream and a second oxygen containing stream into a second gasification reactor, wherein the second carbonaceous stream is a gaseous stream, and wherein the second oxygen containing stream originates from the source of oxygen used in step (a);
(e) at least partially oxidising the second carbonaceous stream in the second gasification reactor, thereby obtaining a second raw synthesis gas;
(f) removing the second raw synthesis gas obtained in step (e) from the second gasification reactor and wherein the first and second gasification reactors are used alternately.

2. Method according to claim 1, wherein the oxygen containing stream (50) comprises > 50 vol.% O₂, preferably > 90 vol.% O₂, more preferably > 95 vol.% O₂, even more preferably > 99 vol.% O₂.

3. Method according to any one of claims 1-2, wherein the first particulate carbonaceous stream is naturally occurring coal, biomass or petroleum coke.

4. Method according to any one of claims 1-3, wherein the second carbonaceous stream is natural gas or mixtures of natural gas and refinery gasses comprising methane and ethane.

5. Method according to one or more of the preceding claims 1-4, wherein the method further comprises the step of:
(g) transporting the first synthesis gas removed in step (c) or the second synthesis gas removed in step (f) to a shift converter; and
(h) reacting at least a part of the CO in the first or second synthesis gas transported in step (g) in the shift converter to produce CO₂ and H₂.

6. Method according to one or more of the preceding claims 1-5, in a process to generate power from a source of petroleum coke as the first, particulate carbonaceous stream, in one or more parallel operated first gasification reactors, wherein the second gasification reactor is capable of preparing a spare synthesis gas mixture comprising of carbon monoxide and hydrogen by partial oxidation of natural gas as the second carbonaceous stream and a certain first volume of oxygen per hour as obtained from an air separation unit and wherein power is obtained from the petroleum coke by (aa) partial oxidation of the petroleum coke and a certain second volume of oxygen per hour as obtained from the air separation unit to yield a synthesis gas mixture, (bb) using the synthesis gas as obtained from step (aa) and/or the spare synthesis mixture to generate power wherein the maximum capacity of the air separation unit is less than the sum of the first and second oxygen volumes per hour.

7. Method according to one or more of the preceding claims 1-5, in a process to prepare hydrogen from a source of petroleum coke in one or more parallel operated first gasification reactors, wherein the second gasification reactor is capable of preparing a spare synthesis gas mixture comprising of carbon monoxide and hydrogen by partial oxidation of natural gas and a certain first volume of oxygen per hour as obtained from an air separation unit and wherein hydrogen is prepared from the petroleum coke by
(aa1) partial oxidation of the petroleum coke and a certain second volume of oxygen per hour as obtained from the air separation unit to yield a synthesis gas mixture, (bb1) subjecting the synthesis gas as obtained from step (aa1) and/or the spare synthesis gas mixture to a water gas shift step,
(cc1) subjecting the shifted gas to a gas separation step to obtain a hydrogen rich mixture, wherein the maximum capacity of the air separation unit is less than the sum of the first and second oxygen volumes per hour.

## Patentansprüche

1. Verfahren zur Herstellung von Synthesegas, umfassend CO und H₂, aus einem kohlenstoffhältigen Strom unter Verwendung eines sauerstoffhältigen Stroms, wobei das Verfahren wenigstens die Schritte umfasst:
(a) Einspeisen eines ersten partikulären kohlenstoffhältigen Stroms und eines ersten sauerstoffhältigen Stroms in einen ersten Vergasungsreaktor, wobei der erste sauerstoffhältige Strom aus einer Sauerstoffquelle stammt;
(b) wenigstens teilweises Oxidieren des ersten kohlenstoffhältigen Stroms im ersten Vergasungsreaktor, wodurch ein erstes Rohsynthesegas erhalten wird;
(c) Entfernen des ersten im Schritt (b) erhaltenen Rohsynthesegases aus dem ersten Vergasungsreaktor;
(d) Einspeisen eines zweiten kohlenstoffhältigen Stroms und eines zweiten sauerstoffhältigen Stroms in einen zweiten Vergasungsreaktor, wobei der zweite kohlenstoffhältige Strom ein gasförmiger Strom ist, und wobei der zweite sauerstoffhältige Strom aus der im Schritt (a) verwendeten Sauerstoffquelle stammt;
(e) wenigstens teilweises Oxidieren des zweiten kohlenstoffhältigen Stroms im zweiten Vergasungsreaktor, wodurch ein zweites Rohsynthesegas erhalten wird;
(f) Entfernen des zweiten Rohsynthesegases, welches im Schritt (e) erhalten wird, aus dem zweiten Vergasungsreaktor, und wobei der erste und der zweite Vergasungsreaktor abwechselnd verwendet werden.

2. Verfahren nach Anspruch 1, wobei der sauerstoffhältige Strom (50) > 50 Vol-% O₂, vorzugsweise > 90 Vol-% O₂, stärker bevorzugt > 95 Vol-% O₂, noch stärker bevorzugt > 99 Vol-% O₂ umfasst.

3. Verfahren nach einem der Ansprüche 1-2, wobei der erste partikuläre kohlenstoffhältige Strom natürlich auftretende Kohle, Biomasse oder Petrolkoks ist.

4. Verfahren nach einem der Ansprüche 1-3, wobei der zweite kohlenstoffhältige Strom von Erdgas oder Mischungen aus Erdgas und Raffineriegasen, umfassend Methan und Ethan, gebildet wird.

5. Verfahren nach einem oder mehreren der vorstehenden Ansprüche 1-4, wobei das Verfahren ferner den Schritt umfasst:
(g) Transportieren des ersten Synthesegases, welches im Schritt (c) entfernt wird, oder des zweiten Synthesegases, welches im Schritt (f) entfernt wird, zu einem Shift-Konverter; und
(h) Umsetzen von wenigstens einem Teil des CO im ersten oder zweiten Synthesegas, welches im Schritt (g) in den Shift-Konverter transportiert wird, um CO₂ und H₂ herzustellen.

6. Verfahren nach einem oder mehreren der vorstehenden Ansprüche 1-5 in einem Verfahren zur Gewinnung von Energie aus einer Quelle von Petrolkoks als dem ersten partikulären kohlenstoffhältigen Strom, in einem oder mehreren parallel betriebenen ersten Vergasungsreaktoren, wobei der zweite Vergasungsreaktor fähig ist, eine zusätzliche Synthesegasmischung, umfassend Kohlenmonoxid und Wasserstoff, durch Partialoxidation von Erdgas als dem zweiten kohlenstoffhältigen Strom und einem bestimmten ersten Volumen an Sauerstoff pro Stunde, wie es aus einer Luftabscheidungseinheit erhalten wird, herzustellen, und wobei die Energie aus dem Petrolkoks gewonnen wird durch
(aa) Partialoxidation des Petrolkoks und eines bestimmten zweiten Volumens an Sauerstoff pro Stunde, wie es aus der Luftabscheidungseinheit erhalten wird, um eine Synthesegasmischung zu ergeben,
(bb) Verwendung des Synthesegases, wie es aus Schritt (aa) erhalten wird und/oder der zusätzlichen Synthesemischung, zur Gewinnung von Energie, wobei die Maximalkapazität der Luftabscheidungseinheit weniger als die Summe der ersten und zweiten Sauerstoffvolumina pro Stunde beträgt.

7. Verfahren nach einem oder mehreren der vorstehenden Ansprüche 1-5 in einem Verfahren zur Herstellung von Wasserstoff aus einer Quelle von Petrolkoks in einem oder mehreren parallel betriebenen ersten Vergasungsreaktoren, wobei der zweite Vergasungsreaktor fähig ist, eine zusätzliche Synthesegasmischung, umfassend Kohlenmonoxid und Wasserstoff, durch Partialoxidation von Erdgas und einem bestimmten ersten Volumen an Sauerstoff pro Stunde, wie es aus einer Luftabscheidungseinheit erhalten wird, herzustellen, und wobei Wasserstoff aus dem Petrolkoks durch
(aa1) Partialoxidation des Petrolkoks und eines bestimmten zweiten Volumens an Sauerstoff pro Stunde, wie es aus der Luftabscheidungseinheit erhalten wird, um eine Synthesegasmischung zu erhalten,
(bb1) Unterwerfen des Synthesegases, wie es aus Schritt (aa1) erhalten wird, und/oder der zusätzlichen Synthesegasmischung unter einen Wassergas-Shift-Schritt, (cc1) Unterwerfen des dem Shift-Schritt unterzogenen Gases unter einen Gasauftrennungsschritt, um eine wasserstoffreiche Mischung zu erhalten, wobei die Maximalkapazität der Luftabscheidungseinheit weniger als die Summe der ersten und zweiten Sauerstoffvolumina pro Stunde beträgt.

## Revendications

1. Procédé de production d'un gaz de synthèse comprenant du CO et du H₂ à partir d'un courant carboné en utilisant un courant oxygéné, le procédé comprenant au moins les étapes suivantes:
(a) injecter un premier courant particulaire carboné et un premier courant oxygéné dans un premier réacteur de gazéification, le premier courant oxygéné provenant d'une source d'oxygène;
(b) oxyder au moins partiellement le premier courant carboné dans le premier réacteur de gazéification, et l'on obtient ainsi un premier gaz de synthèse brut;
(c) retirer le premier gaz de synthèse brut obtenu à l'étape (b) du premier réacteur de gazéification;
(d) injecter un deuxième courant carboné et un deuxième courant oxygéné dans un deuxième réacteur de gazéification, dans lequel le deuxième courant carboné est un courant gazeux, et dans lequel le deuxième courant oxygéné provient de la source d'oxygène utilisée à l'étape (a);
(e) oxyder au moins partiellement le deuxième courant carboné dans la deuxième réacteur de gazéification, obtenant ainsi un deuxième gaz de synthèse brut;
(f) retirer le deuxième gaz de synthèse brut obtenu à l'étape (e) du deuxième réacteur de gazéification et dans lequel les premier et deuxième réacteurs de gazéification sont utilisés en alternance.

2. Procédé selon la revendication 1, dans lequel le courant oxygéné (50) comprend > 50% en volume d'O₂, de préférence > 90% en volume d'O₂, plus préférablement > 95% en volume d'O₂, encore plus préférablement > 99% en volume d'O₂.

3. Procédé selon l'une quelconque des revendications 1-2, dans lequel le premier courant carboné particulaire est le charbon naturel, la biomasse ou le coke de pétrole.

4. Procédé selon l'une quelconque des revendications 1-3, dans lequel le deuxième courant carboné est le gaz naturel ou des mélanges de gaz naturel et des gaz de raffinerie comprenant du méthane et de l'éthane.

5. Procédé selon l'une quelconque des revendications précédentes 1-4, dans lequel le procédé comprend en outre les étapes suivantes:
(g) transporter le premier gaz de synthèse retiré à l'étape (c) ou le deuxième gaz de synthèse retiré à l'étape (f) à un convertisseur de réaction, et
(h) faire réagir au moins une partie du CO dans le premier ou le deuxième gaz de synthèse transporté à l'étape (g) dans le convertisseur de réaction pour produire du CO₂ et du H₂.

6. Procédé selon l'une ou plusieurs des revendications précédentes 1-5, dans un processus pour produire de l'électricité à partir d'une source de coke de pétrole comme le premier courant carboné particulaire, dans un ou plusieurs premiers réacteurs de gazéification fonctionnant en parallèle, dans lequel le deuxième réacteur de gazéification est à même de préparer un mélange de gaz de synthèse de réserve composé de monoxyde de carbone et d'hydrogène par oxydation partielle de gaz naturel comme le deuxième courant carboné et un certain premier volume d'oxygène par heure tel qu'obtenu depuis une colonne de distillation d'air et dans lequel de l'électricité est obtenue à partir du coke de pétrole par (aa) oxydation partielle du coke de pétrole et d'un certain deuxième volume d'oxygène par heure tel qu'obtenu de la colonne de distillation d'air pour donner un mélange de gaz de synthèse, (bb) utilisation du gaz de synthèse tel qu'obtenu de l'étape (aa) et/ou du mélange de synthèse de réserve pour produire de l'électricité, dans lequel la capacité maximale de la colonne de distillation d'air est inférieure à la somme des premier et deuxième volumes d'oxygène par heure.

7. Procédé selon l'une ou plusieurs des revendications précédentes 1-5, dans un processus pour préparer de l'hydrogène depuis une source de coke de pétrole dans un ou plusieurs premiers réacteurs de gazéification fonctionnant en parallèle, dans lequel le deuxième réacteur de gazéification est à même de préparer un mélange de gaz de synthèse de réserve composé de monoxyde de carbone et d'hydrogène par oxydation partielle de gaz naturel et d'un certain premier volume d'oxygène par heure tel qu'obtenu depuis une colonne de distillation d'air et dans lequel de l'hydrogène est préparé à partir de coke de pétrole par
(aa1) oxydation partielle du coke de pétrole et d'un certain deuxième volume d'oxygène par heure tel qu'obtenu de la colonne de distillation d'air pour donner un mélange de gaz de synthèse,
(bb1) soumission du gaz de synthèse tel qu'obtenu à l'étape (aa1) et/ou du mélange de gaz de synthèse de réserve, à une étape de conversion eau gaz,
(cc1) soumission du gaz converti à une étape de séparation de gaz pour obtenir un mélange riche en hydrogène, dans lequel la capacité maximale de la colonne de distillation d'air est inférieure à la somme des premier et deuxième volumes d'oxygène par heure.
